Europäisches Patentamt

European Patent Office

Office européen des brevets

(11) Numéro de publication: **0 281 805 B1**

# (12) FASCICULE DE BREVET EUROPEEN

(45) Date de publication de fascicule du brevet:
30.10.91

(51) Int. Cl.⁵: **G21D 3/04**, G21C 7/36

(21) Numéro de dépôt: 88102276.8

(22) Date de dépôt: **17.02.88**

(54) Procédé de détection de la chûte d'un élément antiréactif dans le réacteur d'une centrale nucléaire et centrale protégée contre une telle chûte.

(30) Priorité: 20.02.87 FR 8702222

(43) Date de publication de la demande:
14.09.88 Bulletin 88/37

(45) Mention de la délivrance du brevet:
30.10.91 Bulletin 91/44

(84) Etats contractants désignés:
BE CH DE ES FR GB LI SE

(56) Documents cités:
CA-A- 1 094 698
US-A- 4 253 093
US-A- 4 399 095
US-A- 4 548 784

(73) Titulaire: **FRAMATOME**
**Tour Fiat 1, Place de la Coupole**
**F-92400 Courbevoie(FR)**

(72) Inventeur: **Bourin, Jean-Michel**
**95 rue Lauriston**
**F-75116 Paris(FR)**
Inventeur: **Bruyere, Michel**
**2 rue des Rosières Evecquemont**
**F-78740 Vaux Sur Seine(FR)**
Inventeur: **Rousseau, Isaac**
**45 rue de l'Amiral Mouchez**
**F-75013 Paris(FR)**

(74) Mandataire: Weinmiller, Jürgen et al
**Lennéstrasse 9 Postfach 24**
**W-8133 Feldafing(DE)**

Rank Xerox (UK) Business Services

## Description

La présente invention concerne la détection de la chute d'éléments antiréactifs, c'est-à-dire absorbeur de neutrons, dans le coeur du réacteur d'une centrale nucléaire à fission.

Elle s'applique plus particulièrement au cas où la chute à détecter est celle de l'une des "grappes de contrôle" qui assurent la régulation et la commande de la puissance nucléaire, c'est-à-dire de la puissance dégagée par la réaction. On sait que de telles grappes sont réparties sur la section horizontale du coeur. Elles se déplacent verticalement dans les deux sens sous l'action d'un mécanisme convenable situé au dessus du coeur, pour faire pénétrer plus ou moins leurs barres absorbantes dans ce dernier.

Pour des raisons de sécurité des détecteurs de position sont disposés pour indiquer à tout instant la position de chaque grappe. Malheureusement ces détecteurs ne peuvent en pratique être situés qu'en regard d'éléments de suspension auxquels les grappes sont accrochées et non pas en regard des grappes elles-mêmes. Un défaut d'accrochage peut donc provoquer la chute accidentelle d'une grappe sans que cette chute puisse être indiquée par ces détecteurs.

Une telle chute provoque une décroissance locale de la puissance nucléaire, donc une décroissance de la puissance globale du coeur. La présence d'une boucle de régulation de puissance fait que cette dernière décroissance est rapidement compensée par une remontée des autres grappes de contrôle. Mais, entre autres inconvénients, apparaît alors une distorsion du flux neutronique qui ralentit la combustion des éléments combustibles voisins de la grappe accidentée et accélère celle des autres. De plus les possibilités d'action sur la réaction sont diminuées. C'est notamment pourquoi il est souhaité de détecter aussi rapidement et sûrement que possible de telles chutes accidentelles pour procéder alors à un arrêt d'urgence du réacteur et rétablir un fonctionnement normal de ce dernier.

Dans les centrales connues cette détection se fait grâce à des moyens de détection qui s'appliquent en même temps à d'autres types d'accidents. Plus précisément ces moyens détectent les températures excessives qui provoquent l'apparition de poches de vapeur en certains points du coeur, le long des crayons constituants les éléments combustibles. Lorsqu'il y a chute accidentelle d'une grappe, la première montée de puissance nucléaire à un certain niveau après cette chute fait apparaître un tel excès de température ou poche de vapeur le long d'un élément combustible dont la combustion est accélérée par la distorsion du flux. Des moyens de protection automatiques différents provoquent alors l'arrêt d'urgence du réacteur. On détermine ensuite la cause de cet arrêt et on répare les conséquences de l'accident avant la remise du réacteur en service.

Elle présente l'inconvénient que, surtout si l'antiréactivité de la grappe accidentée est relativement faible, il peut s'écouler un temps assez long avant que la puissance nucléaire soit élevée suffisamment haut pour provoquer le processus d'arrêt décrit ci-dessus. Le taux de combustion de certains éléments combustibles peut alors s'être beaucoup écarté de la norme.

La présente invention a notamment pour but de permettre une détection plus rapide et plus sûre de la chute d'un élément antiréactif tel qu'une grappe de contrôle, même dans le cas d'une grappe dont la chute ne provoque qu'une petite variation de la puissance nucléaire en raison de sa position et/ou de la faiblesse de son antiréactivité. Elle a aussi pour but, grâce à une telle détection, de mieux protéger le réacteur d'une centrale contre les conséquence dommageables qui résulteraient de la continuation de la réaction nucléaire de service normal après une telle chute.

Et elle vise à atteindre ces buts d'une manière simple, économique et dépourvue d'effets secondaires défavorables tels que notamment des arrêts d'urgence intempestifs du réacteur de la centrale.

C'est dans ces buts qu'elle a notamment pour objet un procédé de détection de la chute d'un élément antiréactif dans le réacteur d'une centrale nucléaire à fission, ce procédé étant caractérisé par le fait que l'on surveille d'une part les variations de la puissance nucléaire du réacteur sous l'action de la boucle de régulation de cette puissance et d'autre part celles d'au moins un paramètre externe lié à des évènements extérieurs au réacteur et intervenant dans l'élaboration de la valeur de consigne de puissance qui est fournie à cette boucle de régulation pour piloter le réacteur, ladite chute étant détectée par le fait qu'on détecte une décroissance rapide de cette puissance alors qu'on ne détecte aucune forte variation de paramètre externe présentant une relation de temps prédéterminée avec cette décroissance rapide.

Une telle relation de temps doit bien entendu être adaptée à chacun des paramètres externes que l'on choisit de surveiller. Elle est telle que sa réalisation montre que la décroissance de puissance nucléaire a été "entraînée" par la variation du paramètre externe. On entend par là qu'elle a été provoquée directement par cette variation ou provoquée par la même cause que cette variation. La relation de temps convenable est souvent simplement que l'intervalle de temps entre les deux événements est inférieur à une valeur prédéterminée.

On comprendra aussi que les mots "rapide" et "forte" ont ici une signification quantitative qui dépend de la centrale à laquelle l'invention est appliquée : Une décroissance de puissance est dite ici "rapide" si elle entre dans le domaine de rapidité des décroissances de puissance qui suivent les chutes accidentelles qu'il s'agit de détecter. Une variation de paramètre externe est dite "forte" si sa rapidité et/ou son ampleur la rendent capable d'entraîner une telle décroissance rapide de la puissance nucléaire.

Par ailleurs il doit être compris que la valeur de consigne de puissance mentionnée pourrait être elle-même utilisée en tant que paramètre externe selon l'invention, car elle représente les paramètres externes à partir desquels elle est élaborée.

La présente invention a également pour objet une centrale nucléaire à réacteur protégé contre la chute d'un élément antiréactif, ce réacteur comportant

- un coeur contenant des éléments combustibles fissiles pour entretenir une réaction nucléaire dégageant une puissance nucléaire,
- un circuit de fluide caloporteur dont une branche passe par ce coeur pour évacuer cette puisance sous forme thermique et en permettre une utilisation à l'extérieur du réacteur,
- des moyens de mesure pour mesurer de manière continue la puissance nucléaire actuelle du réacteur,
- des éléments antiréactifs de régulation aptes à diminuer reversiblement cette puissance,
- et des moyens moteurs de régulation commandés par ces moyens de mesure de puissance pour faire pénétrer plus ou moins ces éléments de régulation dans ce coeur selon que la puissance nucléaire actuelle est supérieure ou inférieure à une valeur de consigne de puissance, de manière à constituer une boucle de régulation de la puissance nucléaire et à permettre de piloter le réacteur en faisant varier cette valeur de consigne, toute réaction de cette boucle s'accompagnant de variations transitoires de la puissance jusqu'à sa stabilisation éventuelle,
- au moins un élément antiréactif étant suspendu au dessus d'un évidement formé dans ce coeur, de sorte qu'une chute accidentelle de cet élément le fait pénétrer dans ce coeur en provoquant d'abord une décroissance rapide de la puissance nucléaire, puis une réaction de ladite boucle de régulation, cette réaction s'accompagnant de variations transitoires de cette puissance jusqu'à sa stabilisation à sa valeur antérieure à cette chute,
- ce réacteur comportant en outre des moyens d'arrêt commandables par un signal d'arrêt de réacteur,
- et des moyens de détection d'accident pour fournir un tel signal d'arrêt de réacteur après un accident dans le coeur notamment une dite chute d'élément antiréactif et pour protéger ainsi le réacteur contre les dommages qui résulteraient de la continuation de ladite réaction sans réparation de cet accident,
- cette centrale comportant en outre,
- un organe de sortie de puissance recevant une puissance thermique d'entrée d'une autre branche dudit circuit de fluide caloporteur et fournissant une puissance de sortie variable et/ou annulable à une charge,
- et au moins un système de réglage de la puissance nucléaire recevant les valeurs de paramètres externes au réacteur tels que ceux qui concernent le fonctionnement de cet organe de sortie de puissance, et élaborant en réponse ladite valeur de consigne de puissance afin d'adapter en permanence la puissance nucléaire actuelle aux variations de ces paramètres, de sorte qu'une telle variation peut, si elle est forte, entraîner une variation rapide de la puissance nucléaire.
- cette centrale étant caractérisée par le fait que lesdits moyens de détection d'accident comportent un circuit spécifique de détection de chute d'élément antiréactif propre à détecter d'une part les décroissances rapides de la puissance nucléaire et d'autre part lesdites fortes variations d'au moins un dit paramètre externe, et à fournir un dit signal d'arrêt de réacteur quand une telle décroissance de la puissance nucléaire est détectée sans que soit détectée aucune telle variation de paramètre externe en relation de temps prédéterminée avec cette décroissance.

Il est en effet apparu dans le cadre de la présente invention que le phénomène de décroissance rapide qui accompagne une dite chute accidentelle était utilisable pour détecter sûrement une telle chute à la seule condition que, lorsqu'on détecte une telle décroissance, on puisse savoir si elle fait partie ou non des variations transitoires de puissance qui accompagnent une forte variation d'un paramètre externe.

Plus précisément une telle connaissance permet de déclencher l'arrêt à partir d'un seuil de vitesse de décroissance suffisamment bas pour que toute chute d'un élément antiréactif dangereux entraîne un tel arrêt même si cet élément présente une relativement faible antiréactivité. Cette connaissance permet en effet d'éliminer le risque qui accompagne le choix d'un tel seuil bas, ce risque étant que des variations relativement fortes des paramètres externes provoquent inutilement des arrêts d'urgence qui seraient dommageables pour l'exploitation de la centrale.

Cette connaissance est rendue possible par le fait que l'on peut connaître simplement et avec une marge d'erreur limitée les relations de temps qui existent entre les fortes variations que l'on peut détecter facilement sur certains paramètres externes et les décroissances rapides de la puissance nucléaire que ces variations elles-mêmes peuvent entraîner.

De préférence, selon la présente invention, on adopte en outre, les dispositions complémentaires suivantes :

- Ledit circuit de détection de chute comporte :
- un circuit de surveillance de puissance nucléaire comportant lui même des moyens de dérivation recevant un signal de mesure de cette puissance et en fournissant un signal dérivé par rapport au temps, et des moyens de seuil recevant ce signal dérivé et délivrant un signal de décroissance rapide de puissance nucléaire quand cette puissance décroît à une vitesse supérieure à une vitesse prédéterminée,
- au moins un circuit de surveillance de paramètre externe, chaque tel circuit comportant des moyens de dérivation recevant un signal de mesure d'un tel paramètre et en fournissant un signal dérivé, et des moyens de seuil recevant ce signal dérivé et fournissant un signal de forte variation de paramètre externe quand ce signal dérivé sort d'un domaine prédéterminé,
- et un circuit logique alimenté par ces circuits de surveillance pour fournir ledit signal d'arrêt de réacteur lorsqu'il reçoit un signal éventuellement retardé de décroissance rapide de puissance nucléaire sans recevoir de signal éventuellement retardé de forte variation de paramètre externe.

Ledit circuit de détection de chute comporte plusieurs dits circuits de surveillance de paramètre externe détectant chacun les variations d'un paramètre externe correspondant, ledit circuit logique comportant des moyens d'addition logique des signaux sortant de ces circuits de surveillance.

Ledit circuit de détection de chute comporte au moins un moyen de retard pour retarder le signal de mesure ou un signal résultant du signal de mesure d'au moins un dit paramètre externe pour fournir au moins un signal de forte variation de paramètre externe, retardé par rapport à un autre signal non retardé de forte variation de ce même paramètre,

- ledit circuit logique fournissant ledit signal d'arrêt de réacteur lorsque en même temps, ledit signal de décroissance rapide de puissance nucléaire actuelle est présent et aucun dit signal retardé ou non retardé de forte variation de paramètre externe n'est présent.

Cette dernière disposition permet de tenir compte du délai éventuel entre une variation d'un paramètre externe et certaines des phases de décroissance de puissance nucléaire qui sont provoquées par cette variation :

La présente invention s'applique particulièrement aux centrales bien connues du type PWR qui présentent les dispositions suivantes :

- Ledit circuit de fluide caloporteur comporte des boucles de refroidissement comportant chacune un circuit primaire à eau préssurisée et un circuit secondaire à eau et vapeur, le circuit primaire refroidissant ledit coeur, le circuit secondaire comportant un générateur de vapeur chauffé par ledit circuit primaire et un condenseur, chacun de ces circuits comportant une pompe de circulation d'eau.
- Lesdits moyens de mesure de la puissance nucléaire sont des chambres sensibles aux flux de neutrons et disposées dans ledit coeur.
- Lesdits éléments antiréactifs de régulation sont des grappes de contrôle comportant chacune plusieurs barres suspendues verticalement et pénétrant plus ou moins dans des évidements dudit coeur, chacune de ces grappes constituant en même temps un dit élément antiréactif pouvant subir une chute accidentelle.
- Ledit organe de sortie de puissance comporte au moins une turbine à vapeur entraînée par la vapeur d'au moins un dit circuit secondaire de fluide caloporteur et entraînant un alternateur.
- Ladite charge est un réseau d'alimentation électrique à partir de cet alternateur.
- Des moyens de commande sont prévus sur ledit circuit secondaire de fluide caloporteur pour commander la pression de vapeur à l'entrée de la turbine selon la vitesse de la turbine et/ou les conditions électriques à la sortie de l'alternateur de manière à constituer une boucle de régulation de l'ensemble turbine alternateur,
- et des moyens de disjonction sont prévus pour isoler l'alternateur du réseau en cas de défaut sur le réseau ou de nécessité liée au fonctionnement de la centrale.

Dans une telle centrale, de manière habituelle,

- le circuit de fluide caloporteur comporte de deux à quatre boucles de refroidissement,
- les moyens de mesure de la puissance nucléire comportent des chambres de mesure installées suivant deux diamètres orthogonaux du coeur et de façon symétrique par rapport à ces diamètres,
- lesdits moyens de détection d'accident comportent entre autres des moyens de détection de température excessive et/ou de vapeur dans le coeur. (C'est à ces moyens que, selon l'invention, viennent s'ajouter lesdits moyens de détection de chute accidentelle).

Dans une telle centrale la présente invention permet d'une part d'arrêter sûrement le réacteur en cas de chute d'une grappe de contrôle même si cette grappe présente une antiréactivité relativement faible ou si sa position fait que sa chute entraîne une relativement faible variation de la puissance nucléaire. Elle permet d'autre part, en même temps, d'éviter d'arrêter inutilement le réacteur notamment,

- lorsque on isole volontairement ou automatiquement la centrale du réseau (une telle isolation est appelée ilotage),
- lorsque le réseau subit un incident électrique nécessitant une réaction rapide de la centrale sans ilotage,
- ou lorsque la turbine se déclenche c'est-à-dire lorsqu'un dispositif automatique coupe son alimentation en vapeur en raison d'une anomalie.

La présente invention s'applique plus particulièrement encore au cas où ladite pompe du circuit primaire de fluide caloporteur est entraînée par un moteur alimenté par le courant fourni par ledit alternateur de sorte que la vitesse de cette pompe varie comme celle de cet alternateur et de ladite turbine. Dans un tel cas il a semblé opportun que ledit circuit de détection de chute comporte deux dits circuits de surveillance de paramètres externes détectant l'un les variations de la pression de vapeur à l'entrée de la turbine, l'autre celles de la vitesse de la pompe dudit circuit primaire.

A l'aide des figures schématiques ci-jointes on va décrire ci-après, à titre d'exemple non limitatif, comment l'invention peut être mise en oeuvre. Dans cette description les dispositions présentées ci-dessus comme préférées selon la présente invention doivent être considérées comme utilisées. Il doit pas ailleurs être compris que les éléments décrits et représentés peuvent, sans sortir du cadre de l'invention, être remplacés par d'autres éléments assurant les mêmes fonctions techniques.

Les figures 1, 2 et 3 représentent des courbes de variations de diverses grandeurs en fonction du temps exprimé en secondes dans le cas de la chute d'une grappe de contrôle dans le réacteur d'une centrale nucléaire, par exemple selon l'invention, ces grandeurs étant respectivement la pression de vapeur à l'entrée de la turbine, la vitesse de la pompe du circuit primaire d'une boucle de refroidissement de ce réacteur, et la puissance nucléaire de ce réacteur.

Les figures 4, 5 et 6 représentent des courbes de variations des mêmes grandeurs, respectivement, dans le cas d'un ilotage automatique de la centrale à la suite d'un défaut du réseau alimenté par cette centrale.

Les figures 7, 8 et 9 représentent des courbes de variations des mêmes grandeurs, respectivement, dans le cas d'un ilotage commandé par les opérateurs de la centrale en l'absence de défaut du réseau.

Les figures 10, 11 et 12 représentent des courbes de variations des mêmes grandeurs, respectivement, dans le cas d'un déclenchement de la turbine de cette centrale.

Les figures 13, 14 et 15 représentent de courbes de variations des mêmes grandeurs, respectivement, dans le cas où un défaut fugitif du réseau ne nécessite pas un ilotage de la centrale.

La figure 16 représente le schéma d'un circuit de détection de chute d'élément antiréactif selon l'invention.

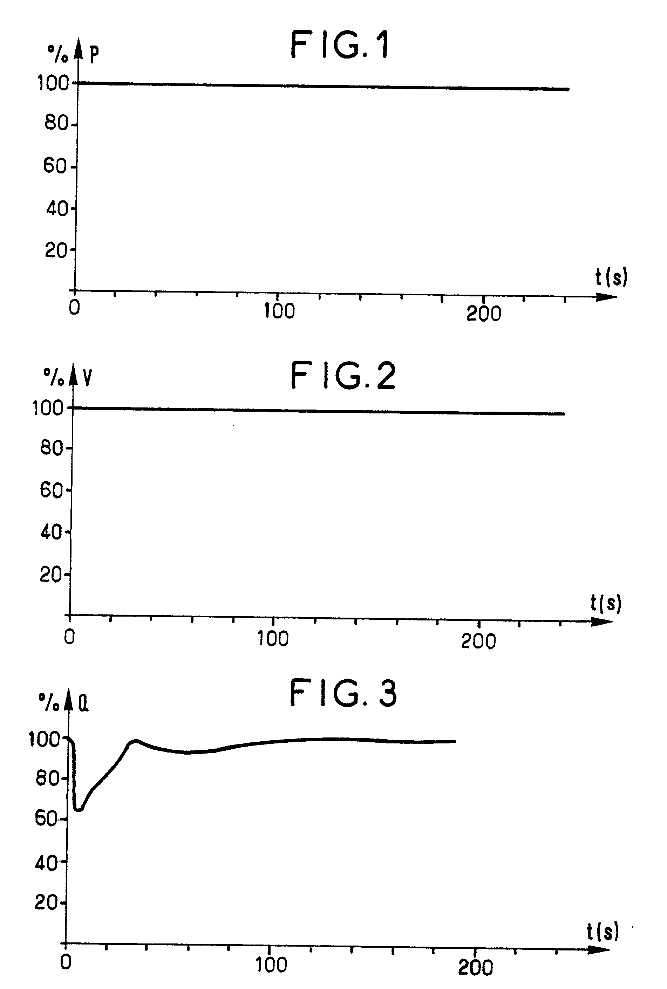

Sur les figures 1, 2 et 3 qui représentent les courbes de valeurs mesurées lors de la chute d'une grappe de contrôle, on voit que la pression de la vapeur à l'entrée de la turbine ainsi que la vitesse des pompes ne varient pas alors que la puissance nucléaire totale décroît très rapidement pour retrouver sa valeur antérieure après quelques dizaines de secondes.

La chute d'une grappe est immédiatement perçue par les chambres de mesure sous la forme d'une décroissance limitée mais rapide de la puissance totale. En effet la grappe qui chute provoque une réduction de la puissance, localisée à quelques assemblages combustibles. Cette réduction est répercutée sur la puissance totale pendant une durée de quelques secondes. Ensuite la boucle de régulation de la puissance nucléaire agit sur les grappes de contrôle qui n'ont pas chuté pour ramener la puissance totale à la valeur de consigne.

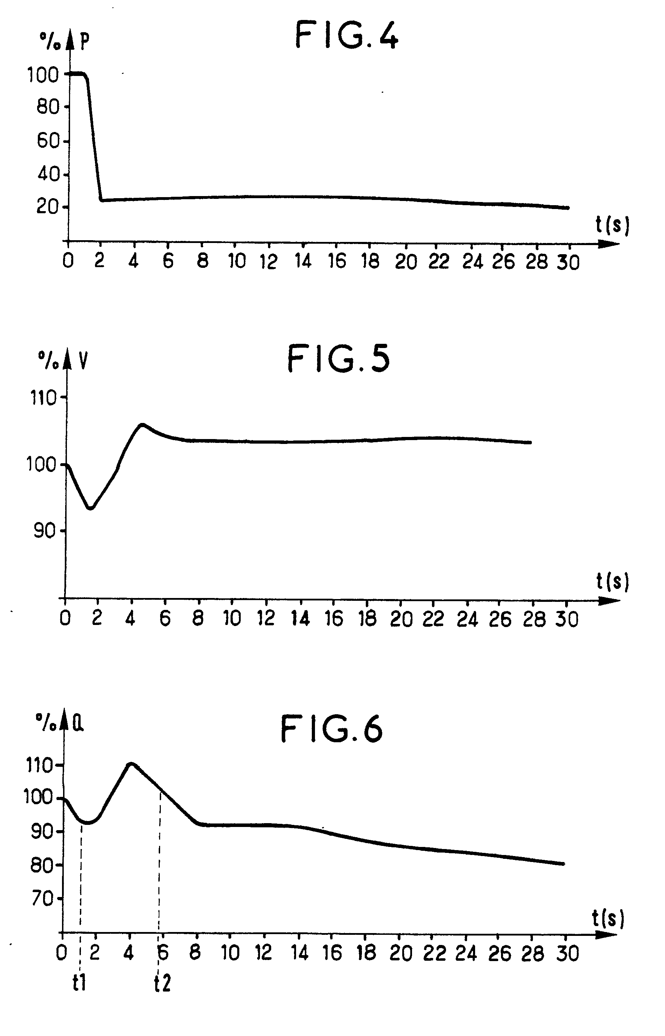

Les figures 4, 5 et 6 représentent les variations des mêmes grandeurs que les figures 1, 2 et 3, mais pour une configuration de la centrale qui est appelée ilotage sur défaut réseau parce qu'elle est établie automatiquement lors de l'apparition d'un défaut du réseau de distribution. La puissance demandée à la chaudière que constitue le réacteur nucléaire est alors abaissée jusqu'à un niveau non nul. Ce niveau est choisi suffisant d'une part pour satisfaire les besoins propres de la centrale pendant la période d'ilotage, d'autre part pour permettre ensuite un retour rapide à la puissance demandée par le réseau quand les défauts de celui-ci ont été réparés.

On voit sur la figure 4 une réduction très rapide de la pression de la vapeur à l'entrée de la turbine. Cette réduction de pression entraine des variations de vitesse de l'ensemble turbo-alternateur et de ce fait de faibles variations de la fréquence du courant électrique. De ces variations de fréquence résulte une variation de la vitesse des pompes des circuits de fluide caloporteur primaires suivant une courbe identique.

Sur la figure 5, on voit que les systèmes de réglage de la puissance nucléaire du réacteur font varier la position des barres de contrôle dans le but de réduire cette puissance. Les variations de certains paramètres et notamment la vitesse des pompes font que la puissance nucléaire ne décroit pas de façon constante et même oscille quelques secondes autour de la valeur de puissance d'origine avant de décroître comme indiqué sur la figure 6.

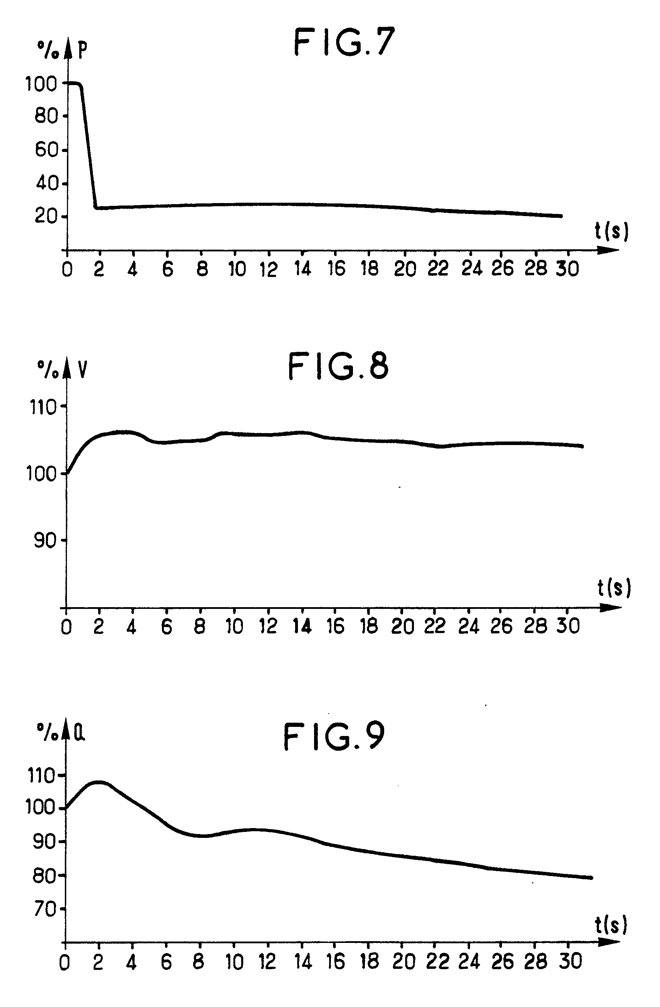

Les figures 7, 8 et 9 représentent les variations des mêmes grandeurs dans le cas où l'ilotage est provoqué par les opérateurs de la centrale. Les courbes de vitesse des pompes et de puissance nucléaire sont similaires à celles des figures 4 et 5 sauf à l'origine où les grandeurs mesurées ne décroissent pas avant d'osciller.

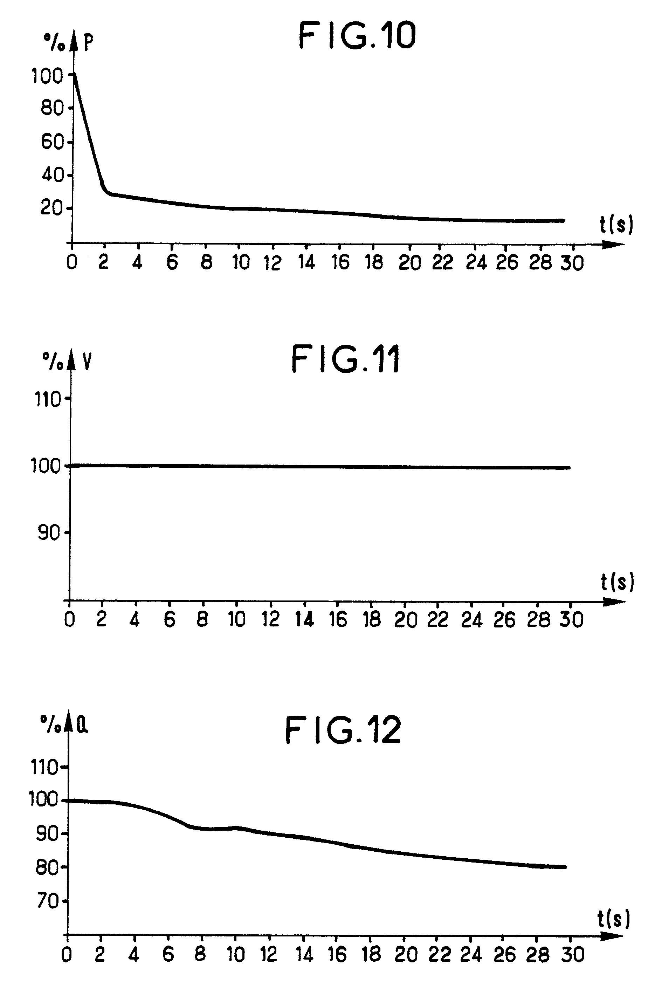

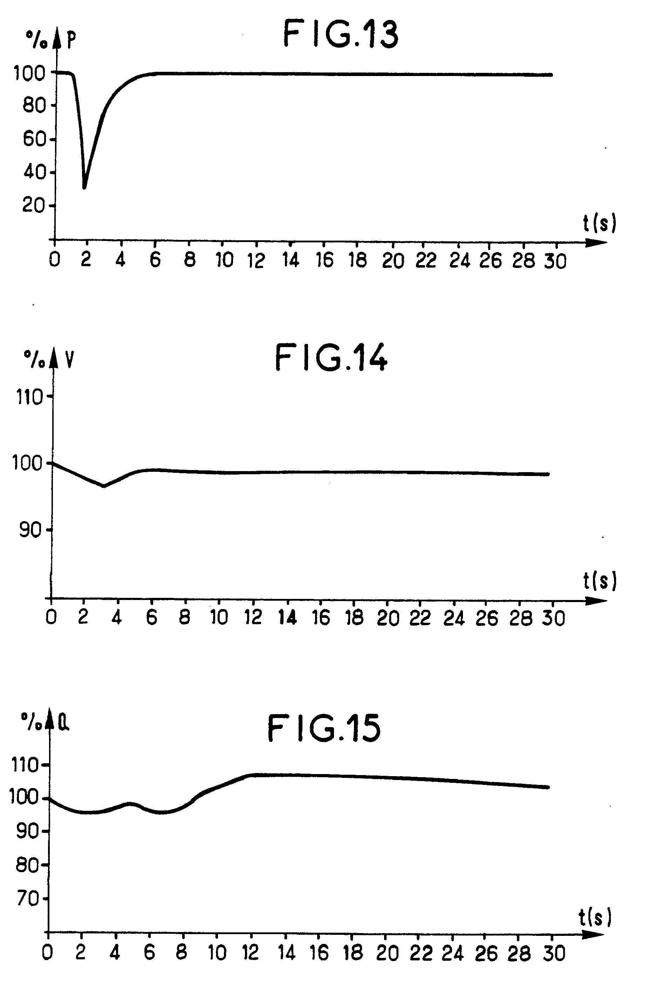

Les figures 10, 11 et 12 représentent les courbes correspondantes dans le cas d'un déclenchement de la turbine sans qu'il soit indispensable de provoquer un arrêt d'urgence. La pression à l'entrée de la turbine diminue dans un premier temps rapidement et dans un deuxième temps plus lentement (Fig.10). La vitesse des pompes primaires reste constante alors que la puissance nucléaire décroît lentement (fig.12).

Les figures 13, 14 et 15 représentent les courbes correspondantes dans le cas où un défaut fugitif du réseau est très vite éliminé et ne justifie pas l'ilotage de la centrale. La pression à l'entrée de la turbine diminue très vite (fig.13) comme pour un ilotage et très vite revient à sa valeur d'origine. La vitesse des pompes diminue légèrement pour retrouver sa valeur initiale (fig.14). La puissance nucléaire diminue progressivement dans un premier temps comme la vitesse des pompes et oscille dans un deuxième temps pour retrouver sa valeur initiale (Fig.15).

Les figures 1, 2 et 3 montrent que dans le cas d'une chute de grappe de contrôle, seule la puissance nucléaire varie, alors que dans les autres cas (fig.4 à 15) au moins un des deux paramètres externes représentés varie en même temps que la puissance nucléaire. Les variations de cette dernière pourraient être suffisantes pour entraîner un arrêt d'urgence du réacteur. Pour éviter les inconvénients d'un tel arrêt intempestif, la présente invention enseigne de calculer la valeur de la dérivée pour chaque point des courbes et de comparer cette valeur à une valeur de seuil prédéterminée.

On ne déclenchera donc l'arrêt d'urgence que si et seulement si le signal dérivé de la puissance nucléaire atteint le seuil correspondant.

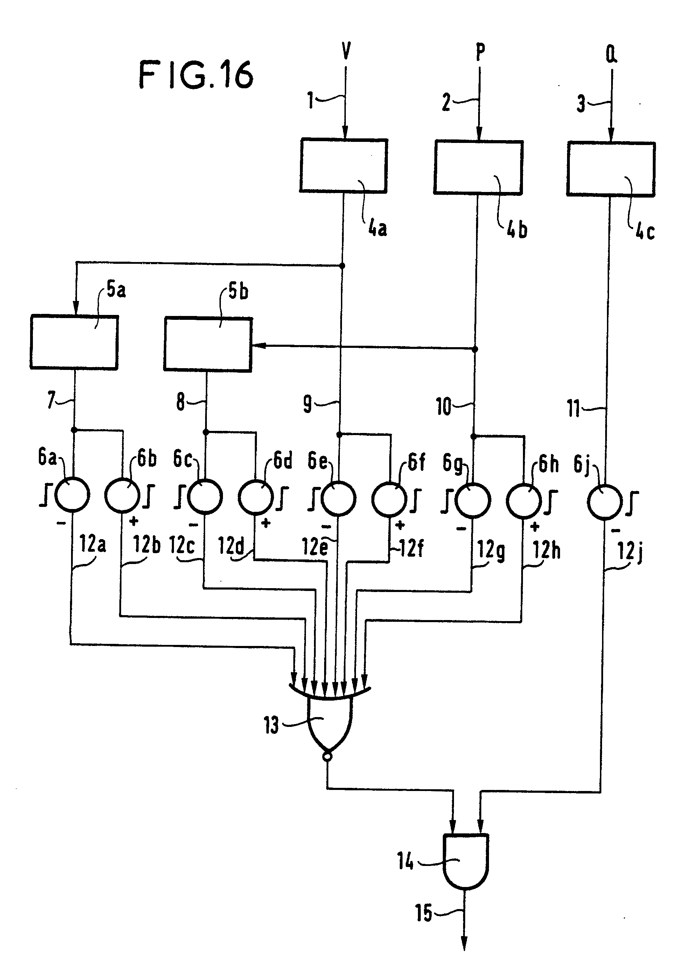

La figure 16 représente le schéma d'un circuit apte à réaliser le procédé selon l'invention.

On dispose des signaux de mesure de vitesse de pompes primaire 1, de mesure de la pression de la vapeur à l'entrée de la turbine 2 et de mesure de la puissance nucléaire 3. Les signaux 1 et 2 représentent deux dits paramètres externes au réacteur. Ces trois signaux sont appliqués à l'entrée de trois circuits dérivateurs 4a, 4b et 4c, respectivement, constituant des moyens de dérivation précédemment mentionnés.

Les signaux dérivés 9 et 10 en sorties des circuits 4a et 4b sont appliqués d'une part, respectivement, à des circuits retardateurs 5a et 5b et d'autre part à des relais à seuils 6e, 6f, 6g, 6h. On comprendra que de tels relais constituent des moyens de seuil tels que précédemment mentionnés.

Les signaux dérivés retardés 7 et 8 en sorties des circuits 5a et 5b sont appliqués également à des relais à seuil 6a, 6b, 6c, 6d. Le signal dérivé 11 en sortie du circuit dérivateur 4c est appliqué aux relais à seuil 6j.

Les relais à seuils émettent un signal valant 0 ou 1. Chacun des signaux 7, 8, 9 et 10 est appliqué à deux relais à seuils de façon à détecter les franchissements d'un seuil positif ( + ) et d'un seuil négatif (-) entre lesquels le signal vaut 0. Chacun des signaux 12a, 12b, 12c, 12d, 12e, 12f, 12g, 12h issus des relais à seuil est appliqué à l'entrée d'un circuit logique NOR 13. Ce circuit délivre une information logique "1" si et seulement si aucun des signaux d'entrée ne vaut 1. Le signal de sortie 12j du relais à seuil 6j vaut 1 quand le signal 11 est au dessous d'un seuil négatif.

Les signaux de sortie du circuit 13 et du relais à seuil 6j sont appliqués à l'entrée d'une porte "et" 14. Quand les deux signaux d'entrée de cette porte "et" sont à l'état "1", le signal de sortie 15 est également à l'état "1" et est utilisé comme signal d'arrêt d'urgence du réacteur.

Compte tenu des durées des divers signaux, il en résulte que, quelque soit l'instant de la variation des signaux de pression de la vapeur à l'entrée de la turbine ou de vitesse des pompes à l'intérieur de limites de temps prédéterminées, les variations de la dérivée de ces signaux seront prises en compte par les relais à seuil au même instant que les variations de puissance nucléaire. A titre d'exemple et en se référant à la figure 6, à l'instant t1 seront pris en compte les signaux 9, 10 et 11, et à l'instant t2 seront pris en compte les signaux retardés 7, 8 et le signal 11.

**Revendications**

1. Centrale nucléaire à réacteur protégé contre la chute d'un élément antiréactif, ce réacteur comportant

    - un coeur contenant des éléments combustibles fissiles pour entretenir une réaction nucléaire dégageant une puissance nucléaire,

- un circuit de fluide caloporteur dont une branche passe par ce coeur pour évacuer cette puisance sous forme thermique et en permettre une utilisation à l'extérieur du réacteur,
- des moyens de mesure pour mesurer de manière continue la puissance nucléaire actuelle du réacteur,
- des éléments antiréactifs de régulation aptes à diminuer reversiblement cette puissance,
- et des moyens moteurs de régulation commandés par ces moyens de mesure de puissance pour faire pénétrer plus ou moins ces éléments de régulation dans ce coeur selon que la puissance nucléaire actuelle est supérieure ou inférieure à une valeur de consigne de puissance, de manière à constituer une boucle de régulation de la puissance nucléaire et à permettre de piloter le réacteur en faisant varier cette valeur de consigne, toute réaction de cette boucle s'accompagnant de variations transitoires de la puissance jusqu'à sa stabilisation éventuelle,
- au moins un élément antiréactif étant suspendu au dessus d'un évidement formé dans ce coeur, de sorte qu'une chute accidentelle de cet élément le fait pénétrer dans ce coeur en provoquant d'abord une décroissance rapide de la puissance nucléaire, puis une réaction de ladite boucle de régulation, cette réaction s'accompagnant de variations transitoires de cette puissance jusqu'à sa stabilisation à sa valeur antérieure à cette chute,
- ce réacteur comportant en outre des moyens d'arrêt commandables par un signal d'arrêt de réacteur,
- et des moyens de détection d'accident pour fournir un tel signal d'arrêt de réacteur après un accident dans le coeur notamment une dite chute d'élément antiréactif et pour protéger ainsi le réacteur contre les dommages qui résulteraient de la continuation de ladite réaction sans réparation de cet accident,
- cette centrale comportant en outre :
- un organe de sortie de puissance recevant une puissance thermique d'entrée d'une autre branche dudit circuit de fluide caloporteur et fournissant une puissance de sortie variable et/ou annulable à une charge,
- et au moins un système de réglage de la puissance nucléaire recevant les valeurs de paramètres externes au réacteur tels que ceux qui concernent le fonctionnement de cet organe de sortie de puissance, et élaborant en réponse ladite valeur de consigne de puissance afin d'adapter en permanence la puissance nucléaire actuelle aux variations de ces paramètres, de sorte qu'une telle variation peut, si elle est forte, entraîner une variation rapide de la puissance nucléaire,

- cette centrale étant caractérisée par le fait que lesdits moyens de détection d'accident comportent un circuit spécifique de détection de chute d'élément antiréactif propre à détecter d'une part les décroissances rapides de la puissance nucléaire, et d'autre part lesdites fortes variations d'au moins un dit paramètre externe, et à fournir un dit signal (15) d'arrêt de réacteur quand une telle décroissance de la puissance nucléaire est détectée sans que soit détectée aucune telle variation de paramètre externe en relation de temps prédéterminée avec cette décroissance.

2. Centrale selon la revendication 1, caractérisée par le fait que ledit circuit de détection de chute comporte,

- un circuit de surveillance de puissance nucléaire comportant lui même des moyens de dérivation (4C) recevant un signal de mesure de cette puissance (3) et en fournissant un signal dérivé par rapport au temps (11),
- et des moyens de seuil (6j) recevant ce signal dérivé et délivrant un signal de décroissance rapide de puissance nucléaire (12j) quand cette puissance décroît à une vitesse supérieure à une vitesse prédéterminée,
- au moins un circuit de surveillance de paramètre externe, chaque tel circuit comportant des moyens de dérivation (4a, 4b) recevant un signal (1, 2) de mesure d'un tel paramètre et en fournissant un signal dérivé (9, 10),
- et des moyens de seuil (6e, 6f, 6g, 6h) recevant ce signal dérivé et fournissant un signal de forte variation de paramètre externe (12e, 12f, 12g, 12h) quand ce signal dérive sort d'un domaine prédéterminé,
- et un circuit logique (13, 14) alimenté par ces circuits de surveillance pour fournir ledit signal d'arrêt de réacteur (15) lorsque il reçoit un signal éventuellement retardé de décroissance rapide de puissance nucléaire sans recevoir de signal éventuellement retardé de forte variation de paramètre externe.

3. Centrale selon la revendication 2, caractérisée par le fait que ledit circuit de détection de chute comporte plusieurs dits circuits de surveillance de paramètre externe (4a, 4b, 6e, 6f, 6g, 6h) détectant chacun les variations d'un paramètre externe correspondant,
   - ledit circuit logique (13, 14) comportant des moyens (13) d'addition logique des signaux sortant de ces circuits de surveillance.

4. Centrale selon la revendication 2, caractérisée par le fait que ledit circuit de détection de chute comporte au moins un moyen de retard (5a, 5b) pour retarder le signal de mesure ou un signal (9, 10) résultant du signal de mesure (1, 2) d'au moins un dit paramètre externe pour fournir au moins un signal de forte variation de paramètre externe (12a, 12b, 12c, 12d,) retardé par rapport à un autre signal non retardé de forte variation de ce même paramètre (12e, 12f, 12g, 12h),
   - ledit circuit logique (13, 14) fournissant ledit signal d'arrêt de réacteur (15) lorsque en même temps, ledit signal de décroissance rapide de puissance nucléaire actuelle (12j) est présent et aucun dit signal retardé ou non retardé de forte variation de paramètre externe n'est présent.

5. Centrale selon la revendication 3, dans laquelle
   - ledit circuit de fluide caloporteur comporte des boucles de refroidissant comportant chacune un circuit primaire à eau préssurisée et un circuit secondaire à eau et vapeur, le circuit primaire refroidissant ledit coeur, le circuit secondaire comportant un générateur de vapeur chauffé par ledit circuit primaire et un condenseur, chacun de ces circuits comportant une pompe de circulation d'eau,
   - lesdits moyens de mesure de la puissance nucléaire sont des chambres sensibles aux flux de neutrons et disposées dans ledit coeur,
   - lesdits éléments antiréactifs de régulation sont des grappes de contrôle comportant chacune plusieurs barres suspendues verticalement et pénétrant plus ou moins dans des évidements dudit coeur, chacune de ces grappes constituant en même temps un dit élément antiréactif pouvant subir une chute accidentelle,
   - ledit organe de sortie de puissance comporte au moins une turbine à vapeur entraînée par la vapeur d'au moins un dit circuit secondaire de fluide caloporteur et entraînant un alternateur,
   - ladite charge est un réseau d'alimentation électrique à partir de cet alternateur,
   - des moyens de commande sont prévus sur ledit circuit secondaire de fluide caloporteur pour commander la pression de vapeur à l'entrée de la turbine selon la vitesse de la turbine et/ou les conditions électriques à la sortie de l'alternateur de manière à constituer une boucle de régulation de l'ensemble turbine alternateur,
   - et des moyens de disjonction prévus pour isoler l'alternateur du réseau en cas de défaut sur le réseau ou de nécessité liée au fonctionnement de la centrale.

6. Centrale selon la revendication 5, dans laquelle ladite pompe du circuit primaire de fluide caloporteur est entraînée par un moteur alimenté par le courant fourni par ledit alternateur de sorte que la vitesse de cette pompe varie comme celle de cet alternateur et de ladite turbine,
   - cette centrale étant caractérisée par le fait que ledit circuit de détection de chute comporte deux dits circuits de surveillance de forte variations de paramètres externes détectant l'un (4b, 6g, 6h) les variations de la pression de vapeur à l'entrée de la turbine, l'autre (4a, 6e, 6f) celles de la vitesse de la pompe dudit circuit primaire.

7. Procédé de détection de la chute d'un élément antiréactif dans le réacteur d'une centrale nucléaire, selon la revendication 1 ce procédé étant caractérisé par le fait que l'on surveille d'une part les variations de la puissance nucléaire du réacteur sous l'action de la boucle de régulation de cette puissance et d'autre part, celle d'au moins un paramètre externe lié à des évènements extérieurs au réacteur et intervenant dans l'élaboration de la valeur de consigne de puissance qui est fournie à cette boucle de régulation pour piloter le réacteur, ladite chute étant détectée par le fait qu'on détecte une décroissance rapide de cette puissance alors qu'on ne détecte aucune forte variation de paramètre externe présentant une relation de temps prédéterminée avec cette décroissance rapide.

**Claims**

1. A nuclear power station having a reactor protected against the fall of an anti-reactive element, said reactor comprising:

- a core containing fissile fuel elements for maintaining a nuclear reaction providing nuclear power,
- a cooling fluid circuit having a portion passing through said core to remove said power in the form of heat and to enable said heat to be utilized outside the reactor,
- measurement means for continuously measuring the current nuclear power of the reactor,
- anti-reactive regulation elements suitable for reversibly reducing said power, and
- regulation drive means controlled by said power measurement means in order to cause said regulation elements to penetrate to a greater or lesser extent into said core depending on whether the current nuclear power is greater than or less than a power reference value, in such a manner as to constitute a nuclear power regulation loop and to enable the reactor to be controlled by varying said reference value, any reaction of said loop giving rise to transient power variations before stabilizing it possibly,
- at least one anti-reactive element being suspended above a free space in said core such that an accidental fall of said element causes it to penetrate into the core, resulting firstly in a rapid drop in nuclear power and followed by a reaction from said regulation loop, which reaction is accompanied by transient variations in said power until its stabilization on its value prior to said fall,
- said reactor further including stop means under control of a reactor stop signal, and
- accident detection means for providing such a reactor stop signal after an accident in the core, in particular such a fall of an anti-reactive element, and thus for protecting the reactor against the damage which would result if said reaction were to continue without the accident being cleared,
- said power station further including
- a power outlet means receiving inlet thermal power from another portion of said cooling fluid circuit and providing variable and/or interruptible outlet power to a load, and
- at least one nuclear power regulating system receiving the values of parameters external to the reactor such as parameters relating to the operation of said power outlet means, and generating said power reference value in response thereto in order to continuously match the current nuclear power to variations in said parameters so that if such a variation is important it is capable of causing a rapid variation in nuclear power,

- said power station being characterized in that said accident detection means comprise a specific circuit for detecting the fall of an anti-reactive element, said circuit being suitable for detecting firstly rapid drops in nuclear power and secondly said important variations in at least one said external parameter, and for providing said reactor stop signal when such a drop in nuclear power is detected with no such external parameter variation in a predetermined time relationship with said drop.

2. A power station according to claim 1, characterized in that said circuit for detecting a fall comprises:

- a nuclear power monitoring circuit comprising differentiating means (4c) receiving a measurement signal representative of said power (3) and delivering a signal (11) which is differentiated with respect to time, and
- threshold means (6j) receiving said derivative signal and delivering a signal (12j) representative of a rapid drop in nuclear power when said power drops at a rate greater than a predetermined rate,
- at least one external parameter monitoring circuit, each such circuit including differentiator means (4a, 4b) receiving a measurement signal (1, 2) representative of such a parameter and delivering a derivative signal (9, 10), and
- threshold means (6c, 6f, 6g, 6h), receiving this derivative signal and providing a signal (12e, 12f, 12g, 12h) representative of an important variation in an external parameter when this derivative signal leaves a predetermined range, and
- a logic circuit (13, 14) fed by said monitoring circuits in order to provide said reactor stop signal (15) on receiving a possibly delayed signal representative of a rapid drop in nuclear power without receiving a possibly delayed signal representative of an important variation in an external parameter.

3. A power station according to claim 2, characterized in that said circuit for detecting a fall comprises a plurality of said circuits for monitoring external parameters (4a, 4b, 6e, 6f, 6g, 6h) each detecting variations in a corresponding external parameter,

- said logic circuit (13, 14) comprising means (13) for logically adding the output signals from said monitoring circuits.

4. A power station according to claim 2, characterized in that said circuit for detecting a fall comprises at least one delay means (5a, 5b) for delaying the measurement signal or a signal (9, 10) resulting from the measurement signal (1, 2) of at least one of said external parameters in order to provide at least one signal (12a, 12b, 12c, 12d) representative of an important variation in an external parameter which signal is delayed relative to another non-delayed signal (12e, 12f, 12g, 12h) representative of an important variation in the same parameter,

- said logic circuit (13, 14) providing said reactor stop signal (15) when said signal representative of a rapid drop in the current nuclear power (12j) is present while none of said delayed and non-delayed signals representative of a large variation in an external parameter is simultaneously present.

5. A power station according to claim 3, wherein

- said cooling fluid circuit includes cooling loops each of which comprises a primary pressurized water circuit and a secondary water and steam circuit, the primary circuit cooling said core, the secondary circuit including a steam generator heated by said primary circuit and a condenser, each of said circuits including a pump for circulating water,
- said means for measuring nuclear power are chambers sensitive to neutron flux and disposed in said core,
- said anti-reactive regulation elements are control clusters each comprising a plurality of vertically-suspended rods that penetrate to a greater or lesser extent into free spaces in said core, each of said clusters simultaneously constituting one of said anti-reactive elements capable of suffering an accidental fall,
- said power outlet means comprising at least one steam turbine driven by the steam from at least one of said secondary cooling fluid circuits and driving an alternator,
- said load being an electricity supply grid fed from said alternator,

- control means being provided on said cooling fluid secondary circuit to control the steam pressure at the inlet to the turbine as a function of the turbine speed and/or the electrical conditions at the alternator outlet, in such a manner as to constitute a regulation loop for the turbine-alternator assembly,
- circuit breaking means are provided to isolate the alternator from the grid in the event of a grid fault or when necessary for power station operation.

6. A power station according to claim 5, wherein said pump for the primary cooling fluid circuit is driven by a motor fed with electricity from said alternator such that the speed of said pump varies with the speed of said alternator and said turbine,

- said power station being characterized in that said circuit for detecting a fall includes two of said circuits for monitoring important variations in external parameters, one of said circuits (4b, 6g, 6h) detecting variations in steam pressure at the inlet to the turbine, and the other (4a, 6e, 6f) detecting variations in the speed of the pump in said primary circuit.

7. A method of detecting the fall of an anti-reactive element into the reactor of a nuclear power station according to claim 1, said method being characterized in that variations are monitored on the one hand in the nuclear power of the reactor under the impact of the loop for regulating said power, and on the other hand of at least one external parameter related to events outside the reactor and intervening in the elaboration of the power reference value which is supplied to said regulation loop in order to control the reactor, said fall being detected by the fact that a rapid drop in said power is detected while no important external parameter variation is detected with a predetermined time relationship to said rapid drop.

## Patentansprüche

1. Kernkraftwerk, das gegen den Fall eines antireaktiven Elements geschützt ist, wobei der Reaktor folgende Komponenten aufweist:

- einen Kern mit Spaltstoff-Brennelementen zur Unterhaltung einer Kernreaktion, die eine Kernenergie freisetzt,
- einen Kühlmittelkreislauf, von dem ein Abschnitt durch den Kern führt zum Abführen dieser Energie in Form von Wärme und zur Nutzung derselben außerhalb des Reaktors,

- Meßmittel zum kontinuierlichen Messen der aktuellen nuklearen Leistung des Reaktors,

- antireaktive Regelelemente zur Erhöhung oder Verringerung dieser genannten Leistung,

- und Regelungsantriebsmittel, die von den Mitteln zur Messung der Leistung gesteuert werden, um die Regelelemente mehr oder weniger tief in den Kern eindringen zu lassen, je nachdem, ob die aktuelle nukleare Leistung größer oder kleiner als ein Leistungssollwert ist, derart, daß ein Regelkreis der nuklearen Leistung gebildet wird und der Reaktor durch Verändern des Sollwerts gesteuert werden kann, wobei jede Reaktion des Kreises von transitorischen Änderungen der Leistung bis zu ihrer etwaigen Stabilisierung begleitet wird,

- wobei mindestens ein antireaktives Element oberhalb eines im Kern gebildeten Freiraums aufgehängt ist, so daß ein unbeabsichtigter Fall dieses Elements zu dessen Eindringen in den Kern führt und zunächst eine rasche Abnahme der nuklearen Leistung und dann eine Reaktion des Regelkreises verursacht, wobei diese Reaktion von transitorischen Änderungen der Leistung bis zu ihrer Stabilisierung auf ihren Wert vor dem Fall begleitet wird,

- wobei der Reaktor weiter Abschaltmittel aufweist, die durch ein Reaktor-Abschaltsignal gesteuert werden,

- und Unfallerfassungsmittel zur Lieferung eines solchen Reaktor-Abschaltsignals nach einem Unfall im Reaktorkern, insbesondere dem Fall eines antireaktiven Elements, und somit zum Schutz des Reaktors vor Schäden, die sich aus der Fortsetzung der Reaktion ohne Behebung des Unfalls ergeben würden,

- wobei das Kraftwerk weiter aufweist:

- ein Generator-Mittel, das die Wärmeeingangsleistung eines anderen Abschnitt des Kühlmittelkreislaufs empfängt und eine veränderliche und/oder abstellbare Austrittsleistung an eine Last liefert

- und mindestens ein System zur Regelung der nuklearen Leistung, das die Werte von reaktorexternen Parametern, wie etwa solche empfängt, die das Funktionieren des Generator-Mittels betreffen, und das als Antwort den Leistungssollwert liefert, um die aktuelle nukleare Leistung fortlaufend an die Änderungen dieser Parameter anzupassen, derart, daß eine solche Änderung, sofern sie stark ist, eine rasche Änderung der nuklearen Leistung herbeiführt,

dadurch gekennzeichnet, daß die Unfallerfassungsmittel eine spezifische Schaltung zur Erfassung des Falls eines antireaktiven Elements aufweist, das zum einen die rasche Abnahme der nuklearen Leistung und zum anderen die starken Änderungen mindestens eines externen Parameters erfaßt und das ein Reaktorabschaltsignal (15) liefert, wenn eine solche Abnahme der nuklearen Leistung erkannt wird, obwohl keine solche Änderung eines externen Parameters erfaßt wird, die in einem vorbestimmten Zeitverhältnis zu dieser Abnahme steht.

2. Kraftwerk nach Anspruch 1, dadurch gekennzeichnet, daß die Schaltung zur Erfassung eines Falls aufweist:

- eine Schaltung zur Überwachung der nuklearen Leistung, mit Differenziermittel (4C), die ein Leistungsmeßsignal (3) empfangen und ein nach der Zeit (11) differenziertes Signal liefern,

- und Schwellwertmittel (6j), die das differenzierte Signal empfangen und ein die rasche Abnahme der nuklearen Leistung wiedergebendes Signal (12j) liefern, wenn diese Leistung mit einer Geschwindigkeit abnimmt, die höher als eine vorbestimmte Geschwindigkeit ist,

- mindestens eine Schaltung zur überwachung der externen Parameter, wobei jede derartige Schaltung Differenziermittel (4a, 4b) aufweist, die ein Meßsignal (1, 2) eines solchen Parameters empfangen und ein differenziertes Signal (9, 10) liefern,

- und Schwellwertmittel (6c, 6f, 6g, 6h), die das differenzierte Ssignal empfangen und ein die starke Änderung der externen Parameter wiedergebendes Signal (12e, 12f, 12g, 12h) liefern, wenn das differenzierte Signal über einen vorbestimmten Bereich hinausgeht,

- und eine Logikschaltung (13, 14), die von den Überwachungsschaltungen versorgt wird, um das Reaktorabschaltsignal (15) zu liefern, wenn die Schaltung ein ggfs. verzögertes Signal bezüglich der raschen Abnahme der nuklearen Leistung empfängt, ohne ein ggfs. verzögertes Signal bezüglich der starken Änderung der externen Parameter zu empfangen.

3. Kraftwerk nach Anspruch 2, dadurch gekennzeichnet, daß die Schaltung zur ERfassung des Falls eines antireaktiven Elements mehrere Schaltungen zur überwachung der externen Parameter (4a, 4b, 6e, 6f, 6g, 6h) aufweist, die je die Änderungen eines entsprechenden externen Parameters erfassen,
- wobei die Logikschaltung (13, 14) Mittel (13) zum logischen Addieren der von diesen Überwachungsschaltungen kommenden Signale aufweist.

4. Kraftwerk nach Anspruch 2, dadurch gekennzeichnet, daß die Schaltung zur Erfassung des Falls eines antireaktiven Elements mindestens ein Verzögerungsmittel (5a, 5b) zur Verzögerung des Meßsignals oder eines aus dem Meßsignal hervorgehenden Signals (1, 2) betreffend mindestens einen externen Parameter aufweist, um mindestens ein die starke Änderung der externen Parameter wiedergebendes Signal (12a, 12b, 12c, 12d) zu liefern, das relativ zu einem anderen nicht verzögerten Signal (12e, 12f, 12g, 12h) der starken Änderung desselben Parameters verzögert ist,
- wobei die Logikschaltung (13, 14) das Reaktorabschaltsignal (15) liefert, wenn gleichzeitig das Signal der raschen Abnahme der aktuellen nuklearen Leistung (12j) vorhanden, aber kein verzögertes oder nichtverzögertes Signal der starken Änderung der externen Parameter vorhanden ist.

5. Kraftwerk nach Anspruch 3, bei der
- der Kühlmittelkreislauf Kühlschleifen aufweist, die je einen Druckwasserprimärkreislauf und einen Wasser- und Dampfsekundärkreislauf aufweist, wobei der Primärkreislauf den Reaktorkern kühlt und der Sekundärkreislauf einen Dampfgenerator, der vom Primärkreislauf beheizt wird, aufweist, und jeder der Kreisläufe eine Wasserumwälzpumpe aufweist,
- die Mittel zur Messung der nuklearen Leistung Kammern sind, die auf Neutronenfluß ansprechen und im Reaktorkern angeordnet sind,
- die antireaktiven Elemente Steuerstabbündel sind, die aus mehreren senkrecht aufgehängten Stäben bestehen und mehr oder weniger tief in Freiräume des Kerns eindringen, wobei jedes dieser Bündel zugleich ein antireaktives Element bildet, das einen unbeabsichtigten Fall erleiden kann,
- das Generator-Mittel mindestens eine Dampfturbine aufweist, die vom Dampf mindestens eines sekundären Kühlmittelkreislaufs angetrieben wird und einen Wechselstromgenerator treibt,
- die Last ein an den Wechselstromgenerator angeschlossenes elektrisches Versorgungsnetz ist,
- Steuermittel für den sekundären Kühlmittelkreislauf vorgesehen sind, um den Dampfdruck am Einlaß der Turbine entsprechend der Geschwindigkeit der Turbine und/oder den elektrischen Bedingungen am Ausgang des Wechselstromgenerators zu steuern, derart, daß ein Regelkreis für die Gesamtheit der Turbine und des Wechselstromgenerators gebildet wird,
- Trennschaltmittel vorgesehen sind, um den Wechselstromgenerator vom Netz im Fall einer Netzstörung oder aufgrund einer mit der Funktion des Kraftwerks in Verbindung stehenden Notwendigkeit zu trennen.

6. Kraftwerk nach Anspruch 5, bei dem die Pumpe des primären Kühlmittelkreislaufs durch einen Motor mit Strom angetrieben wird, der von dem Wechselstromgenerator geliefert wird, derart, daß sich die Geschwindigkeit der Pumpe mit derjenigen des Generators und der Turbine ändert,
- wobei das Kraftwerk dadurch gekennzeichnet ist, daß die Schaltung zur Erfassung des Falls eines antireaktiven Elements zwei Schaltungen zur überchung der starken Änderungen der externen Parameter aufweist, wobei die eine (4b, 6g, 6h) die Änderungen des Dampfdrucks am Einlaß der Turbine und die andere (4a, 6e, 6f) die Änderungen der Geschwindigkeit der Pumpe des Primärkreislaufs erfaßt.

7. Verfahren zur Erfassung des Falls eines antireaktiven Elements in den Reaktor eines Kernkraftwerks nach Anspruch 1, dadurch gekennzeichnet, daß man zum einen die Änderungen der nuklearen Leistungen des Reaktors unter der Einwirkung des Leistungs-Regelkreises und zum anderen die Änderungen mindestens eines mit Ereignissen außerhalb des Reaktors verbundenen externen Parameters überwacht, der in die Bildung des Leistungssollwerts einfließt und an den Regelkreis zur Steuerung des Reaktors geliefert wird, wobei der Fall dadurch erfaßt wird, daß man eine rasche Abnahme der Leistung mißt, während man zugleich keine starke Änderung der externen Parameter feststellt, die eine vorbestimmte Zeitbeziehung zu der raschen Abnahme aufweisen würde.

# FIG.1

# FIG.2

# FIG.3

FIG.4

FIG.5

FIG.6

# FIG.7

# FIG.8

# FIG.9

# FIG.10

# FIG.11

# FIG.12

# FIG.13

# FIG.14

# FIG.15

FIG.16